# EUROPÄISCHE PATENTSCHRIFT

(11) **EP 3 263 398 B1**
(45) Veröffentlichungstag und Bekanntmachung des Hinweises auf die Patenterteilung: **26.09.2018**
(21) Anmeldenummer: 17175410.4
(22) Anmeldetag: 12.06.2017
(51) Int. Cl.: B60N 2/50, B60N 2/54, B60N 2/02

(54) **FEDERUNGSVORRICHTUNG**
SUSPENSION DEVICE
SYSTÈME DE SUSPENSION

(30) Priorität: 01.07.2016 DE 102016112105
(43) Veröffentlichungstag der Anmeldung: 03.01.2018
(73) Patentinhaber: GRAMMER AG, 92224 Amberg (DE)
(72) Erfinder: Lorey, Konstantin, 92546 Schmidgaden (DE)
(74) Vertreter: Hannke, Christian

(56) Entgegenhaltungen:
- GB-A- 2 166 948
- GB-A- 2 169 504

## Beschreibung

Die Erfindung betrifft eine Federungsvorrichtung, insbesondere für einen Fahrzeugsitz, umfassend ein Federungsoberteil und ein Federungsunterteil, welche durch eine erste Verbindungsschwinge und eine zweite Verbindungsschwinge miteinander verbindbar sind.

Es sind aus dem Stand der Technik derartige Federungsvorrichtungen für Fahrzeugsitze bekannt, wobei das Federungsoberteil, das Federungsunterteil, die erste und die zweite Verbindungsschwinge ein Parallelogramm bilden, so dass das Federungsoberteil parallel zu dem Federungsunterteil auch im Falle einer Federbewegung ist. Die Federungsvorrichtungen umfassen zur Federung des Fahrzeugsitzes vorzugsweise eine Feder, wobei die Ausschubkraft der Federungsvorrichtung durch Spannung der Feder verstellt werden kann.

Die GB2166948 zeigt eine am Untersitzteil angebrachte Feder die mittels eines Zahnsegmentes und eines Ritzels durch einen ebenso am Sitzunterteil angeordneten Hebel verstellt werden kann.

Wenn sich jedoch ein relativ schwerer Fahrer auf dem Fahrzeugsitz niederlässt und die Ausschubkraft entsprechend seines Gewichtes einstellen möchte, muss er die Vorspannung der Feder deutlich erhöhen, was einen erheblichen Kraftaufwand bedeutet und hierdurch auch eine schnelle Verstellung nicht gegeben ist.

Es ist demzufolge Aufgabe der vorliegenden Erfindung, eine Federungsvorrichtung bereitzustellen, mittels welcher schnell und mit wenig Kraftaufwand eine Verstellung der Ausschubkraft durchführbar ist.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, eine Federungsvorrichtung für einen Fahrzeugsitz, umfassend ein Federungsoberteil und ein Federungsunterteil, welche durch eine erste Verbindungsschwinge und eine zweite Verbindungsschwinge miteinander verbunden sind, bereitzustellen, wobei die Federungsvorrichtung ein an dem Federungsoberteil angeordnetes erstes einstellbares Zahnradelement, ein mit der ersten Verbindungsschwinge verbundenes zweites Zahnradelement zum Verstellen einer Position einer ersten Federeinheit, wodurch eine Federkraft und eine Federrate der Federungsvorrichtung veränderbar sind, und ein mit dem ersten und dem zweiten Zahnradelement zumindest wirkverbundenes und mit der ersten Verbindungsschwinge verbundenes drittes Zahnradelement aufweist.

Besonders vorteilhaft ist das zweite Zahnradelement gegenüber der ersten Verbindungsschwinge verschwenkbar angeordnet.

Besonders vorteilhaft umfasst das Federungsoberteil einen Fahrzeugsitz, insbesondere einen Fahrzeugsitz mit einem Sitzteil und einer Rückenlehne.

Unter dem Begriff "Federeinheit" wird eine Einheit verstanden, die zumindest eine Feder im herkömmlichen Sinne umfasst. Eine Federeinheit bzw. eine Feder kann mechanisch oder hydraulisch oder pneumatisch ausgestaltet sein. Vorteilhaft kann die Feder auch als die Federeinheit selbst verstanden werden. Bei dieser Feder handelt es sich vorzugsweise um eine Zugfeder, die auf vielfältige Weise ausgestaltet sein kann. Durch eine mechanische Ausbildung kann das Gewicht der Federungsvorrichtung weiter reduziert werden und ein einfacherer Aufbau bereitgestellt werden.

Bevorzugt bilden das Federungsoberteil, das Federungsunterteil und die erste und zweite Verbindungsschwinge ein Parallelogramm. Vorteilhaft sind die erste und zweite Verbindungsschwinge sowohl mit dem Federungsunterteil als auch dem Federungsoberteil schwenkbar verbunden.

Gemäß einer bevorzugten Ausführungsform umfasst die Federungsvorrichtung mehr als eine Federeinheit, also zusätzlich zu der ersten Federeinheit noch eine zweite, dritte, usw. Federeinheit, wobei jede Federeinheit mindestens eine Feder umfasst, so dass die Bauhöhe der Federungsvorrichtung hierdurch noch weiter reduziert werden kann, da eine auf die Federungsvorrichtung eingeleitete Kraft von zwei oder mehr Federn aufgenommen werden kann. Die Federn können also hierdurch kleiner dimensioniert werden. Besonders vorteilhaft ist es, zwei Federn für die Federungsvorrichtung vorzusehen. Es können aber auch eine beliebige Anzahl von Federn, insbesondere drei oder mehr, vorgesehen sein.

Der erste und der zweite Endbereich der Federeinheit sind hierbei vorzugsweise das erste und das zweite Ende der Feder, wobei besonders bevorzugt das erste und/oder das zweite Ende der Feder eine Öse aufweisen, so dass die Feder bzw. die Federeinheit leicht in dazu vorgesehene Öffnungen oder Vorrichtungen eingehängt bzw. aufgehängt werden können.

Erfindungsgemäß wird die Federrate und die Ausschubkraft der Federungsvorrichtung gemäß Anspruch 1 mittels einer Verstellung der Position der ersten Federeinheit und nicht mittels einer Veränderung der Federspannung der Federeinheit, also insbesondere der Feder, geändert.

Eine Verstellung der Position ist hierbei gleichbedeutend mit einer Lageänderung der Federeinheit im Raum. Durch die Positionsveränderung der Federeinheit bzw. der Feder der Federeinheit wird ein an der Federeinheit angreifender Hebel in seiner Länge verändert.

Gemäß einer bevorzugten Ausführungsform ist es besonders vorteilhaft, wenn die erste Federeinheit mit einem ersten Endbereich mittels einer durch das zweite Zahnradelement betätigbaren Verstelleinrichtung mit der ersten Verbindungsschwinge und mit einem zweiten Endbereich mit dem Federungsunterteil verbunden ist. Die Position des zweiten Endbereiches der ersten Federeinheit ist hierbei im Wesentlichen konstant. Vorteilhaft ist die Verstelleinrichtung mit dem zweiten Zahnradelement starr verbunden, so dass bei einer Drehung des zweiten Zahnradelementes entsprechend die Verstelleinrichtung betätigt wird.

Dies hat zur Folge, dass mittels der Verstelleinrichtung durch Betätigen des ersten Zahnradelements insbesondere die Position bzw. Lage des ersten Endbereichs der ersten Federeinheit verstellbar ist. Insbesondere wird dadurch der erste Endbereich relativ zu dem Federungsunterteil, welches vorzugsweise starr mit einem Boden, einer Karosserie oder dergleichen verbindbar ist, verstellt. Der an der ersten Federeinheit angreifende Hebel erstreckt sich dabei von einer ersten Schwenkachse der ersten Verbindungsschwinge mit dem Federungsunterteil bis zu dem ersten Endbereich der Federeinheit. Durch Verstellung bzw. Verschieben des ersten Endbereichs der Federeinheit ist die Länge des Hebels veränderbar, so dass hierdurch die Federrate und die Ausschubkraft der Federungsvorrichtung veränderbar ist. Der erste Endbereich umfasst also entsprechend den Krafteinleitungspunkt der Federeinheit.

Die Ausschubkraft wird aufgrund des folgenden Zusammenhangs verändert. Wie bekannt ist, ist ein Drehmoment proportional zu der Länge eines Hebels, wenn die angreifende Kraft konstant ist. Durch Verstellung der Position des ersten Endbereichs wird die Länge des Hebels verändert. Sitzt ein verhältnismäßig schwerer Fahrer auf dem Fahrzeugsitz, der über die erfindungsgemäße Federungsvorrichtung verfügt, so muss der Hebel entsprechend länger sein als bei einem leichten Fahrer.

Dadurch, dass erfindungsgemäß nicht die Federspannung zur Veränderung der Ausschubkraft verändert wird, sondern nur die Lage der Federeinheit verändert wird, ist lediglich eine geringe Kraft seitens eines Benutzers notwendig, um die Ausschubkraft der Federungsvorrichtung zu verändern. Hierdurch wird auch eine sehr schnelle Verstellung der Ausschubkraft ermöglicht.

Gemäß einer bevorzugten Ausführungsform ist ein Hebelelement vorgesehen, welches mit dem ersten Zahnradelement mittels einer ersten Drehachse verbunden ist, mittels welches Hebelelements das erste Zahnradelement einstellbar ist.

Alternativ ist es hierbei denkbar, dass ein elektrischer Motor mit dem ersten Zahnradelement mittels der ersten Drehachse verbunden ist, wobei mittels des Motors das erste Zahnradelement einstellbar ist und entsprechend der Einstellung des ersten Zahnradelements das zweite Zahnradelement betätigbar ist.

Vorzugsweise ist das Hebelelement an einer ersten Seitenfläche des Federungsoberteils, vorteilhafter an einer ersten Seitenfläche des Sitzteils, angeordnet, so dass das Hebelelement besonders einfach zu erreichen und zu betätigen ist. Vorzugsweise weist das Hebelelement in einer neutralen Stellung in Fahrzeugsitzlängsrichtung nach vorne. Die erste Drehachse ist dabei sowohl mit dem Hebelelement als auch dem ersten Zahnradelement verbunden und verläuft im Wesentlichen in einer Sitzbreitenrichtung. Auch kann durch diese Anordnung das Hebelelement gut in die Abdeckung des Federungsoberteils integriert werden, wodurch eine ansprechende Optik des Sitzes erreicht werden kann. Weiter ist durch die Anordnung des Hebelelements an dem Federungsoberteil das Hebelelement immer gut erreichbar, da es in Bezug auf das Federungsoberteil eine konstante Lage aufweist.

Gemäß einer weiteren bevorzugten Ausführungsform ist ein Übersetzungsverhältnis des ersten Zahnradelements und des zweiten Zahnradelements mindestens 2, bevorzugter mindestens 3 und besonders bevorzugt mindestens 5.

Durch ein entsprechend groß gewähltes Übersetzungsverhältnis ergibt sich folgender Vorteil. Wurde die Position des ersten Federelements mittels Einstellung des ersten Zahnradelements und der entsprechenden Betätigung des zweiten Zahnradelements und der Verstelleinrichtung gemäß den Wünschen eines Fahrers eingestellt, so möchte der Fahrer die jeweilige Position des ersten Federelementes beibehalten, was einhergeht mit der gewünschten Federrate.

Diese Federrate soll auch während eines Schwingvorganges des Federungsoberteils relativ zum Federungsunterteil beibehalten werden. Durch die relative Bewegung des Federungsoberteils gegenüber dem Federungsunterteil wird entsprechend das erste Zahnradelement relativ zum Federungsunterteil bewegt.

Entsprechend der Anordnung des Federungsunterteils, des Federungsoberteils, der ersten und zweiten Verbindungsschwinge als Parallelogramm bewegt sich das erste Zahnradelement bei einer Relativbewegung des Federungsoberteils gegenüber dem Federungsunterteils auf einer Kreisbahn. Ebenso bewegt sich die erste Verbindungsschwinge mit dem darauf angeordneten dritten Zahnradelement auf einer Kreisbahn.

Da das zweite Zahnradelement mit der ersten Verbindungsschwinge schwenkbar verbunden ist, bleibt das zweite Zahnradelement durch eine Verschwenkung der ersten Verbindungsschwinge unbeeinflusst.

Da jedoch das zweite Zahnradelement über das dritte Zahnradelement mit dem ersten Zahnradelement wirkverbunden ist und das erste und dritte Zahnradelement sich bei einer Relativbewegung des Federungsoberteils gegenüber dem Federungsunterteil auf einer Kreisbahn bewegen, werden Abrollbewegungen der Zahnradelemente durchgeführt und durch diese Abrollbewegungen eine Drehbewegung des zweiten Zahnradelements hervorgerufen. Um diese Drehbewegung, welche eine weitere Verstellung der Position des ersten Federelementes bedeutet, zu minimieren, ist es vorteilhaft, eine möglichst große Übersetzung zu wählen, so dass durch geringe Abrollbewegungen des ersten und dritten Zahnradelements der Einfluss dieser auf das zweite Zahnradelement minimiert werden kann.

Trotz dieser Minimierung wird das zweite Zahnradelement jedoch weiterhin geringfügig gedreht, wobei diese Drehung natürlich abhängig ist vom tatsächlichen Übersetzungsverhältnis des ersten Zahnradelements und des zweiten Zahnradelements.

Gemäß einer besonders bevorzugten Ausführungsform ist das zweite Zahnradelement Kreissektor-förmig ausgebildet. Ein dem Kreissektor zugeordneter Mittelpunktswinkel oder auch Zentriwinkel beträgt hierbei höchstens 180°, bevorzugter höchstens 150° und besonders bevorzugt höchstens 120°. Dadurch, dass das zweite Zahnradelement in Form eines Kreissektors ausgebildet ist, wird gegenüber einem vollwertigen Zahnradelement durch das zweite Zahnradelement weniger Platz gebraucht.

Gemäß einer weiteren bevorzugten Ausführungsform ist das Hebelelement über ein selbsthemmendes Getriebe mit der ersten Drehachse und mit dem ersten Zahnradelement verbunden ist, um entsprechend über die Wirkverbindung des ersten Zahnradelements mit dem zweiten Zahnradelement die Bewegung des zweiten Zahnradelements in beide Drehrichtungen einzuschränken. Diese Ausführungsform ist insbesondere vorteilhaft, wenn das zweite Zahnradelement als ein Kreissektor ausgebildet ist und durch eine zu weite Drehung des zweiten Zahnradelements der Wirkkontakt zu dem ersten und dritten Zahnradelement unterbrochen wird, so dass keine weitere Drehung des zweiten Zahnradelements mehr möglich ist.

Gemäß einer weiteren bevorzugten Ausführungsform ist ein viertes Zahnradelement vorgesehen, welches mit der ersten Verbindungsschwinge verbunden ist und mit dem zweiten und dem dritten Zahnradelement oder dem ersten und dem dritten Zahnradelement in Wirkkontakt steht.

Hierdurch ist es möglich, die Größe der Zahnradelemente, insbesondere die Größe des dritten Zahnradelementes, zu verändern und insbesondere zu verkleinern, wodurch es möglich ist, eine platzsparende Anordnung und Ausgestaltung der Zahnradelemente vorzunehmen. Insbesondere ein im Durchmesser verkleinertes drittes Zahnradelement wirkt sich hierbei vorteilhaft auch auf die Kinematik des gesamten Sitzes aus.

Gemäß einer alternativen Ausführungsform ist es denkbar, ein Zahnriemenelement vorzusehen, welches mit dem zweiten und dem dritten Zahnradelement zumindest wirkverbunden ist, wobei das dritte Zahnradelement als ein Doppelzahnradelement ausgebildet ist.

Auch hierdurch ist es möglich, insbesondere das dritte Zahnradelement in seiner Größe zu verkleinern und demzufolge den Platzbedarf der Zahnradelemente zu verringern. Gemäß der alternativen Ausführungsform ist es notwendig, dass das dritte Zahnradelement als ein Doppelzahnradelement ausgebildet ist, um ein Zahnriemenelement vorzusehen. Auch ist es beispielsweise denkbar, eine Rollenkette oder dergleichen vorzusehen.

Sind gemäß einer bevorzugten Ausführungsform vier verschiedene Zahnradelement vorgesehen, so wird bei einer geringfügigen Drehung des zweiten Zahnradelements als Folge einer Schwingbewegung des Federungsoberteils gegenüber dem Federungsoberteil entsprechend gedreht. Als Folge einer Einfederbewegung, also einer Bewegung des Federungsoberteils nach unten, gesehen in Höhenrichtung, so entspannt sich die erste Federeinheit, wohingegen beim Ausfedern, also einer Bewegung des Federungsoberteils nach oben, die erste Federeinheit mehr vorgespannt. Sind jedoch nur drei verschiedene Zahnradelemente vorgesehen, so ist der Zusammenhang genau umgedreht, d.h. bei der Einfederbewegung wird die Federeinheit gespannt und bei der Ausfederbewegung entspannt.

Hierdurch wird in einem gewissen Maße die Möglichkeit geboten, abhängig vom Anregungsprofil die Schwingungseigenschaften bzw. die SEAT-Werte zu optimieren und zu verbessern.

Gemäß einer weiteren Ausführungsform weist die Verstelleinrichtung eine erste Einhängevorrichtung auf, mit welcher der erste Endbereich der ersten Federeinheit verbindbar ist, wobei die erste Einhängevorrichtung exzentrisch an der Verstelleinrichtung angeordnet ist.

Bei Verstellung der Position der ersten Federeinheit wird durch die exzentrische Anordnung vorzugsweise der erste Endbereich gedreht und so die Position der ersten Federeinheit verändert.

Gemäß einer weiteren Ausführungsform weist die Verstelleinrichtung eine zweite Einhängevorrichtung auf, mit welcher ein erster Endbereich eines Dämpfers verbindbar ist, wobei die zweite Einhängevorrichtung exzentrisch mit der Verstelleinrichtung verbunden ist und ein zweiter Endbereich des Dämpfers mit dem Federungsunterteil verbindbar ist.

Durch eine derartige Anordnung des Dämpfers ist es daher möglich, die Dämpferleistung des Dämpfers und dadurch die Dämpferleistung der Federung bei Verstellung der Ausschubkraft anzupassen. Wird der Hebel verlängert, so erhöhen sich entsprechend auch der Hub des Dämpfers und der wirksame Hebel für eine Dämpferkraftanleitung. Entsprechend wird bei einer Verkürzung des Hebels der Hub des Dämpfers verringert.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: eine perspektivische Ansicht der Federungsvorrichtung gemäß einer bevorzugten Ausführungsform;
- Fig. 2: die Federungsvorrichtung gemäß Figur 1 in einer weiteren perspektivischen Ansicht;
- Fig. 3A: die Federungsvorrichtung für einen leichten Fahrer gemäß Figur 1 und einen Fahrzeugsitz mit einer ersten Sitzhöhe in einer Seitenansicht;
- Fig. 3B: die Federungsvorrichtung für einen leichten Fahrer gemäß Figur 1 und einen Fahrzeugsitz mit einer zweiten Sitzhöhe in einer Seitenansicht;
- Fig. 4A: die Federungsvorrichtung für einen schweren Fahrer und einen Fahrzeugsitz mit einer ersten Sitzhöhe in einer Seitenansicht;
- Fig. 4B: die Federungsvorrichtung für einen schweren Fahrer und einen Fahrzeugsitz mit einer zweiten Sitzhöhe in einer Seitenansicht;
- Fig. 5A: die Federungsvorrichtung gemäß Figur 3A in einer weiteren Seitenansicht;
- Fig. 5B: die Federungsvorrichtung gemäß Figur 3B in einer weiteren Seitenansicht;
- Fig. 6A: die Federungsvorrichtung gemäß Figur 4A in einer weiteren Seitenansicht;
- Fig. 6B: die Federungsvorrichtung gemäß Figur 4B in einer weiteren Seitenansicht;
- Fig. 7A: den Fahrzeugsitz in einer ersten Sitzneigungsstellung;
- Fig. 7B: den Fahrzeugsitz in einer zweiten Sitzneigungsstellung.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

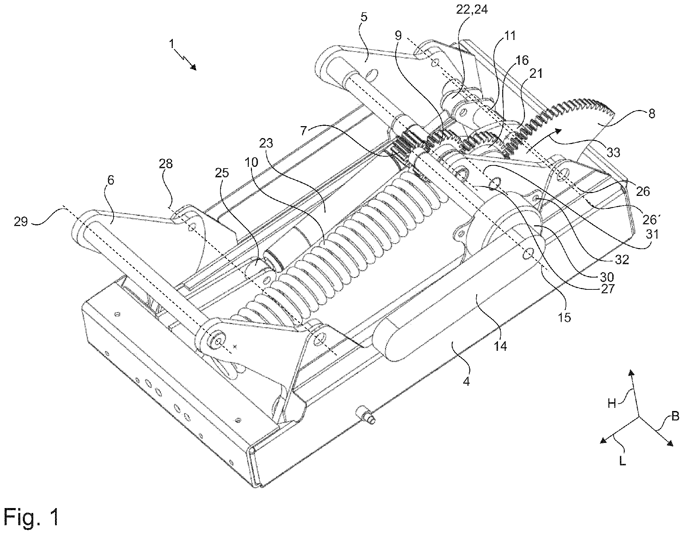

In der Figur 1 ist in einer perspektivischen Ansicht eine Federungsvorrichtung 1 gemäß einer bevorzugten Ausführungsform gezeigt. Zu erkennen ist hierbei auch ein Sitzunterbau umfassend ein Federungsunterteil 4, welches beispielsweise mit einem Karosserieboden (hier nicht gezeigt) starr verbunden ist, eine erste Verbindungsschwinge 5, welche mittels einer ersten Schwenkachse 26 mit dem Federungsunterteil 4 und mittels einer zweiten Schwenkachse 27 mit dem Federungsoberteil 3 (hier nicht gezeigt) schwenkbar verbunden ist, und eine zweite Verbindungsschwinge 6, welche mittels einer dritten Schwenkachse 28 mit dem Federungsunterteil 4 und mittels einer zweiten Schwenkachse 29 mit dem Federungsoberteil 3 schwenkbar verbunden ist.

Gemäß der bevorzugten Ausführungsform der Federungsvorrichtung 1 sind ein erstes Zahnradelement 7, ein zweites Zahnradelement 8, ein drittes Zahnradelement 9 und ein viertes Zahnradelement 16 zu erkennen, wobei mittels dem vierten Zahnradelement 16 das zweite 8 und das dritte Zahnradelement 9 in Wirkkontakt stehen. Ebenso steht das erste 7 mit dem dritten Zahnradelement 9 direkt in Wirkkontakt, so dass bei einer Einstellung bzw. Betätigung des ersten Zahnradelements 7 zunächst das dritte Zahnradelement 9, dann das vierte Zahnradelement 16 und hierdurch das zweite Zahnradelement 7 betätigt wird.

Das erste Zahnradelement 7 ist vorliegend mittels eines Hebelelements 14 und einer Verbindungsstange 37 einstellbar, wobei das Hebelelement 14 und entsprechend die Verbindungsstange 37 um eine erste Drehachse 15 drehbar gelagert ist und mittels eines Befestigungselements 30, welches insbesondere ein Kugellager oder dergleichen zur leichteren Drehbarkeit des Hebelelements aufweisen kann, an dem Federungsoberteil 3 befestigbar ist. Besonders bevorzugt umfasst dabei das Befestigungselement 30 ein selbsthemmendes Getriebe (hier nicht gezeigt), welches durch das Hebelelement 14 betätigbar ist, insbesondere über eine Ratschenbewegung. Wird das selbsthemmende Getriebe nicht durch das Hebelelement 14 betätigt, so hält das Getriebe und entsprechend das erste Zahnradelement 7 seine Position, wodurch insbesondere auch das zweite Zahnradelement 8 seine Position beibehält. Beispielsweise kann das Befestigungselement 30 mittels Schraubverbindungen, Nietverbindungen oder dergleichen mittels Befestigungsöffnungen 32 mit dem Federungsoberteil verbunden werden.

Weiter ist der Figur 1 zu entnehmen, dass das zweite Zahnradelement 8 um eine zweite Drehachse 26' gedreht werden kann. Das dritte 9 und das vierte Zahnradelement 16 sind ebenso an der ersten Verbindungsschwinge 5 angeordnet und das dritte Zahnradelement 9 um die zweite Schwenkachse 27 und das vierte Zahnradelement 16 um eine fünfte Schwenkachse 31 drehbar gelagert.

Darüber hinaus ist das zweite Zahnradelement 8 mit einer Verstelleinrichtung 11 starr verbunden, so dass die Verstelleinrichtung 11 betätigt wird, wenn das zweite Zahnradelement 8 um die zweite Drehachse 26' gedreht wird. An der Verstelleinrichtung 11 sind eine erste 21 und eine zweite Einhängevorrichtung 22 verdrehfest gegenüber der Verstelleinrichtung 11 angeordnet, welche insbesondere exzentrisch gegenüber der Verstelleinrichtung 11 angeordnet sind. Hierdurch können eine erste Federeinheit 10 und vorliegend ebenfalls ein Dämpfer 23 jeweils in ihrer Position verändert werden, indem jeweils der erste Endbereich des Dämpfers 24 und der erste Endbereich 12 der ersten Federeinheit 10 durch Verschwenken der Verstelleinrichtung 11 und entsprechend durch die Verschwenkung des ersten Endbereichs 12 der Federeinheit 10 und des ersten Endbereichs 24 des Dämpfers 23 in ihrer Position verändert werden.

In der Figur 1 ist eine Position der Federungsvorrichtung 1 und insbesondere der Verstelleinrichtung 11 zu erkennen, welche einem leichten Fahrer entspricht. Das zweite Zahnradelement 8 wurde dabei gemäß einer ersten Drehrichtung 33 derart verschwenkt, dass das zweite Zahnradelement 8 gerade noch in Wirkkontakt mittels eines ersten Zahnradelementbereiches 35 des zweiten Zahnradelements 8 mit dem vierten Zahnradelement 16 steht, da das zweite Zahnradelement 8 vorliegend als ein Kreissektor ausgebildet ist. Ist das zweite Zahnradelement 8 derart gemäß einer zweiten Drehrichtung 35 verschwenkt, dass das zweite Zahnradelement 8 mittels eines zweiten Zahnradelementbereichs 36, welcher sich vom ersten Zahnradelementbereich 35 unterscheidet, so entspricht dieser Stellung einer Position für einen schweren Fahrer. Eine derartige Position für einen schweren Fahrer ist den nachfolgenden Zeichnungen zu entnehmen.

Eine Höhenverstellung des Fahrzeugsitzes 2 kann hierbei mittels einer Höhenverstelleinrichtung (hier nicht gezeigt) vorgenommen werden.

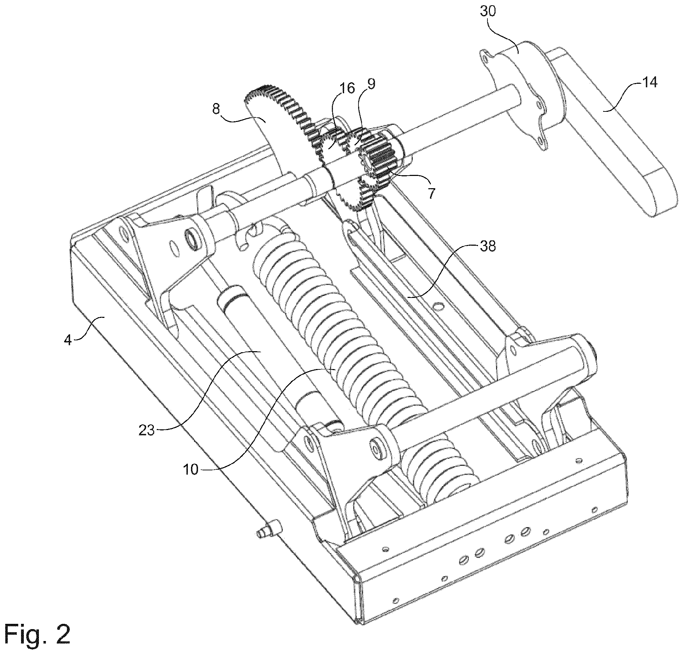

In der Figur 2 ist die Federungsvorrichtung 1 des Fahrzeugsitzes 2 (hier nicht gezeigt) in einer weiteren perspektivischen Darstellung gezeigt. Hierbei ist gut erkennbar, dass zwischen der ersten Verbindungsschwinge 5 und der zweiten Verbindungsschwinge 6 eine Stabilisierungsvorrichtung 38 angeordnet ist, um möglichst präzise die gebildete Form des Parallelogramms auch bei einer Schwingbewegung des Federungsoberteils 3 gegenüber dem Federungsunterteil 4 beibehalten zu können.

Auch die Figur 2 zeigt die Federungsvorrichtung 1 in einer Position für einen leichten Fahrer.

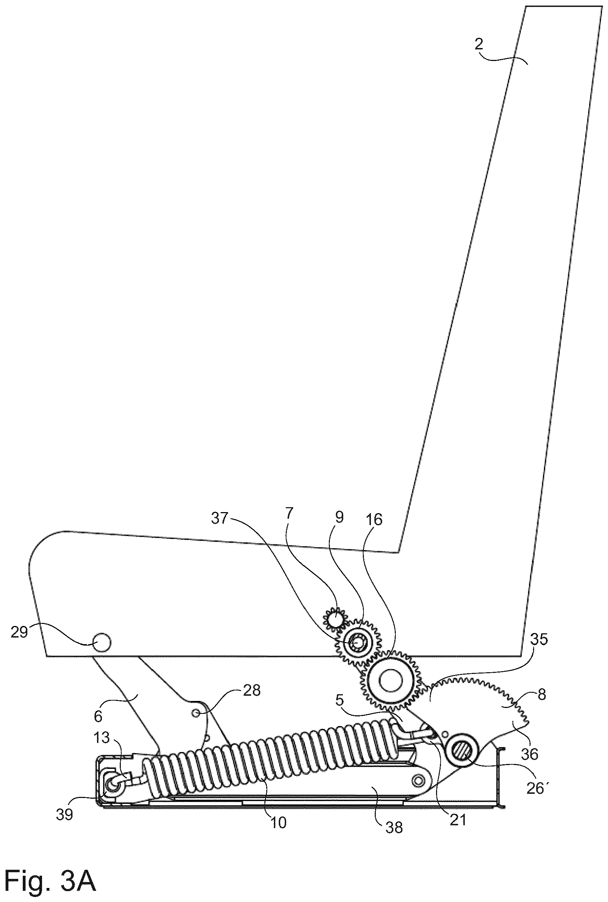

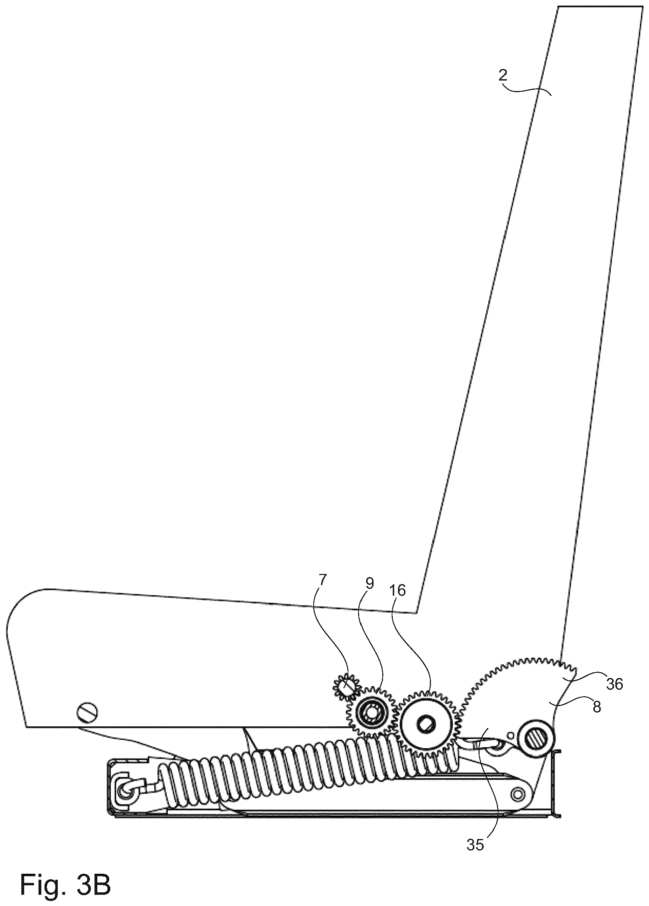

Die Figuren 3A und 3B zeigen hierbei die Federungsvorrichtung 1gemäß den Figuren 1 und 2 mit einem Fahrzeugsitz 2 in einer Seitenansicht, wobei sich die Sitzhöhe des Fahrzeugsitzes 2 sich bei einem Vergleich der Figuren 3A und 3B voneinander unterscheiden.

Entsprechend einem weiteren Vergleich der Figuren 3A und 3B ist erkennbar, dass bei einer Verschwenkung der ersten Verbindungsschwinge 5 entsprechend die Dreh- bzw. Schwenkachsen 15, 26, 26', 27 der Zahnradelemente 7, 8, 9, 16 mit verschwenkt werden. Die Stellung bzw. Lage des zweiten Zahnradelements 8 gegenüber der ersten Verbindungsschwinge 5 wird hierbei nicht beeinträchtigt, so dass das zweite Zahnradelement 8 weiterhin mit den anderen Zahnradelementen 7, 9, 16 in Wirkverbindung steht.

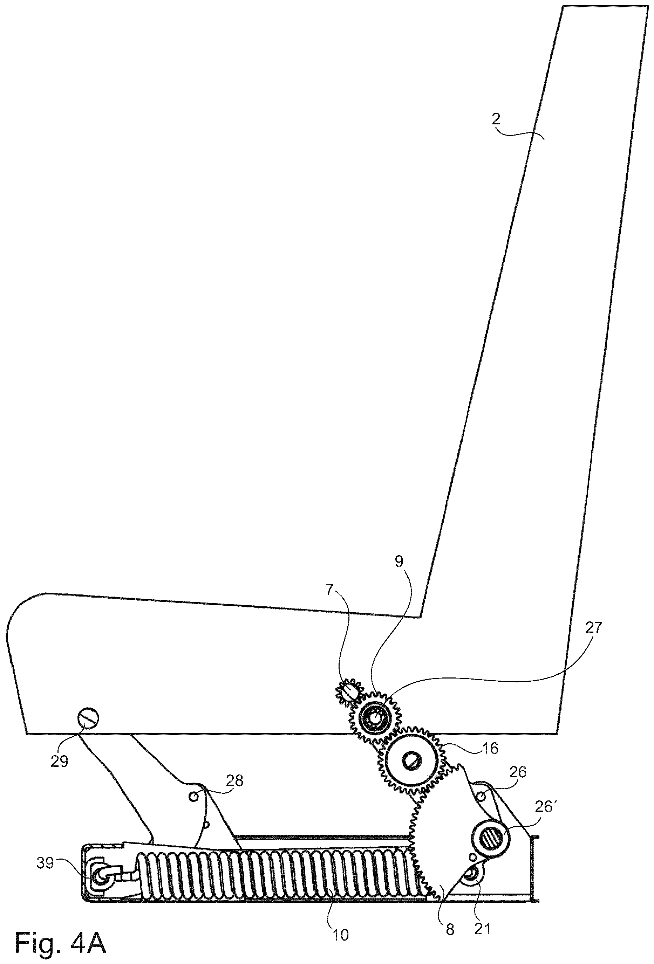

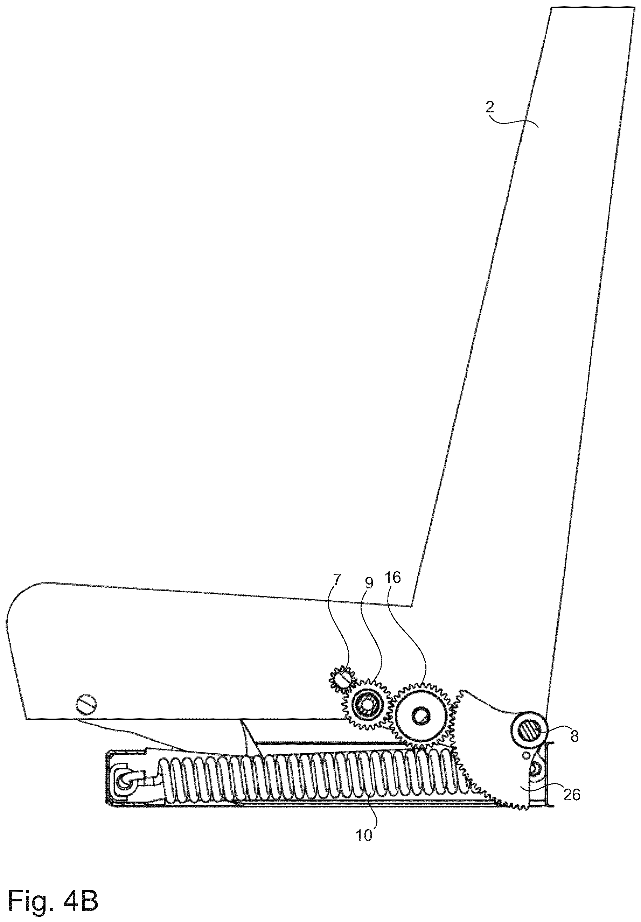

Bei einer Position des zweiten Zahnradelements 8 für einen leichten Fahrer ist vorliegend der erste Zahnradelementendbereich 35 in Wirkverbindung mit dem vierten Zahnradelement 16 steht, wohingegen bei einer Position des zweiten Zahnradelements 8 für einen schweren Fahrer wie in den Figuren 4A und 4B der zweite Zahnradelementendbereich 36 in Wirkverbindung mit dem vierten Zahnradelement 16 steht

Die Figur 4A zeigt im Vergleich mit der Figur 4B einen Fahrzeugsitz, welcher sich in der Sitzhöhe unterscheidet und jeweils in einer Position für einen schweren Fahrer.

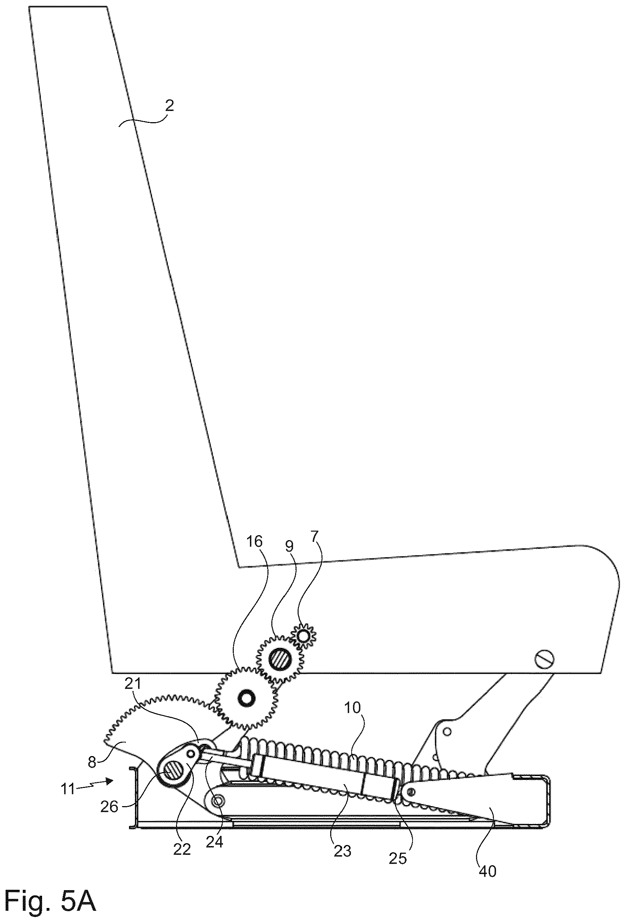

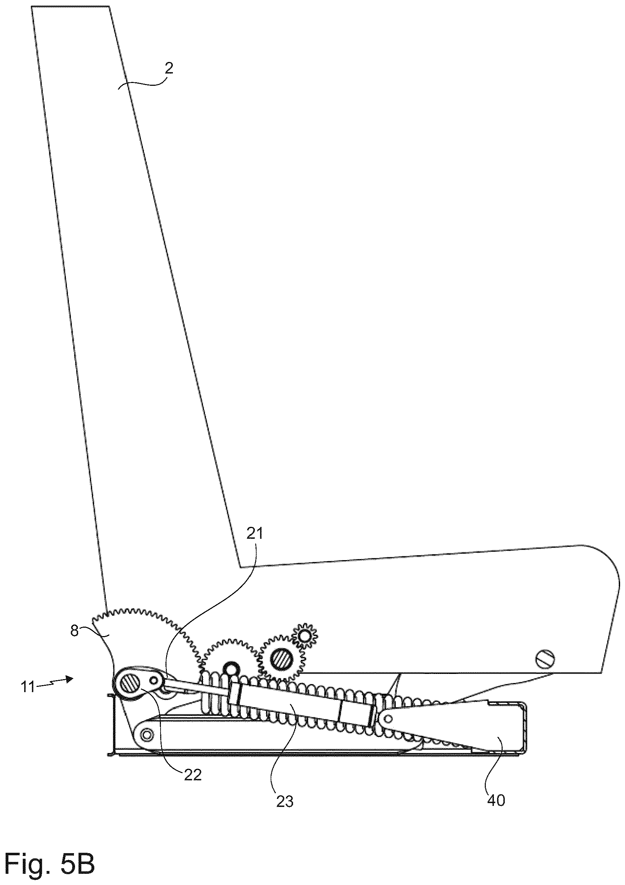

Die Figuren 5A und 5B zeigen ebenso die Position für einen leichten Fahrer gemäß einer weiteren Seitenansicht. Wie zu erkennen ist, ist zusätzlich ein Dämpfer 23 vorgesehen, welcher durch seinem ersten Endbereich 24 mit einer zweiten Einhängevorrichtung 22 mit der Verstelleinrichtung 11 verbunden ist und durch seinen zweiten Endbereich 25 mit einer vierten Einhängevorrichtung 40 an dem Federungsunterteil 4 verbunden ist.

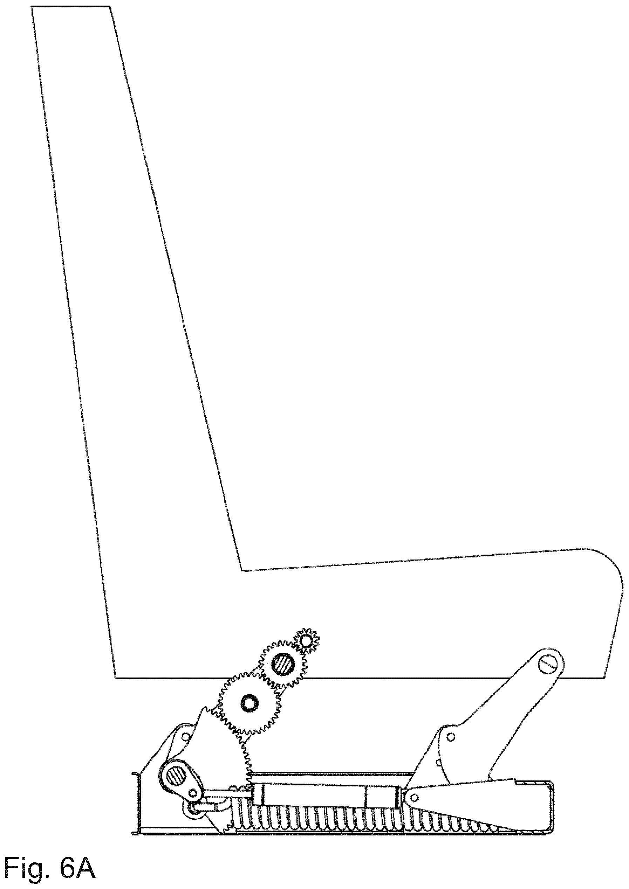

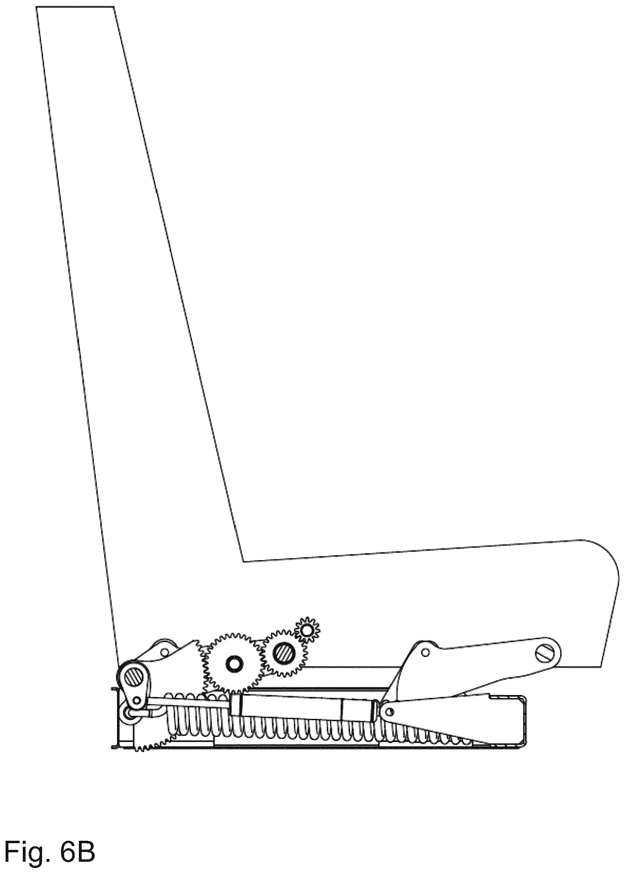

Eine entsprechende Darstellung der Federungsvorrichtung 1 mit einem Dämpfer 23 für eine Position für einen schweren Fahrer ist gemäß den Figuren 6A und 6B dargestellt.

Insgesamt wird abhängig von der Sitzhöhe, welche entsprechend einer Auslenkung des Federungsoberteils 3 gegenüber dem Federungsunterteil 4 entspricht, die Federrate bzw. die Federkraft bzw. die Ausschubkraft mittels der Verstelleinrichtung 11 automatisch angepasst.

Es ist jedoch weiterhin die Möglichkeit gegeben, bei einer vorgegebenen Sitzhöhe die Federungsvorrichtung weiter einzustellen, entweder von der Position des leichten Fahrers hin zu der Position des schweren Fahrers oder umgekehrt.

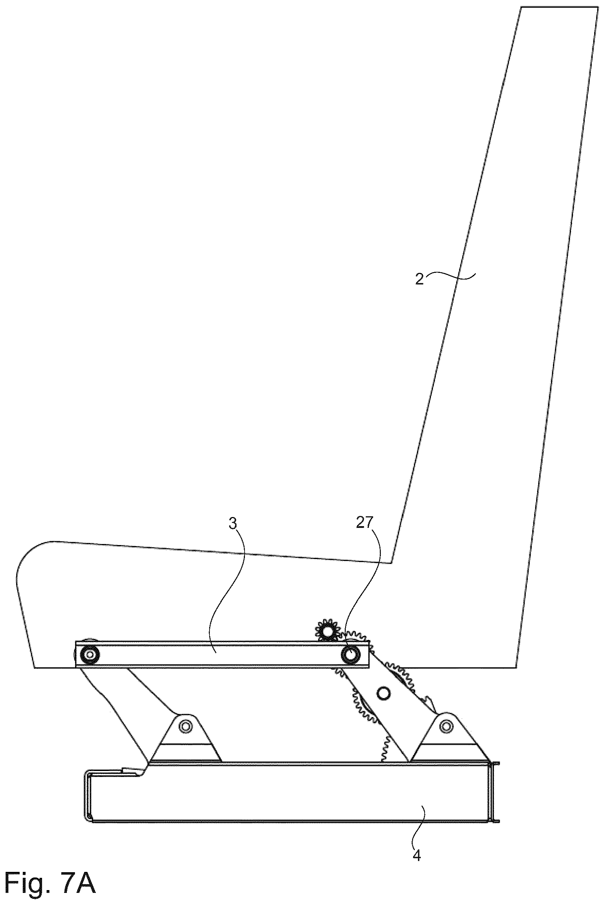

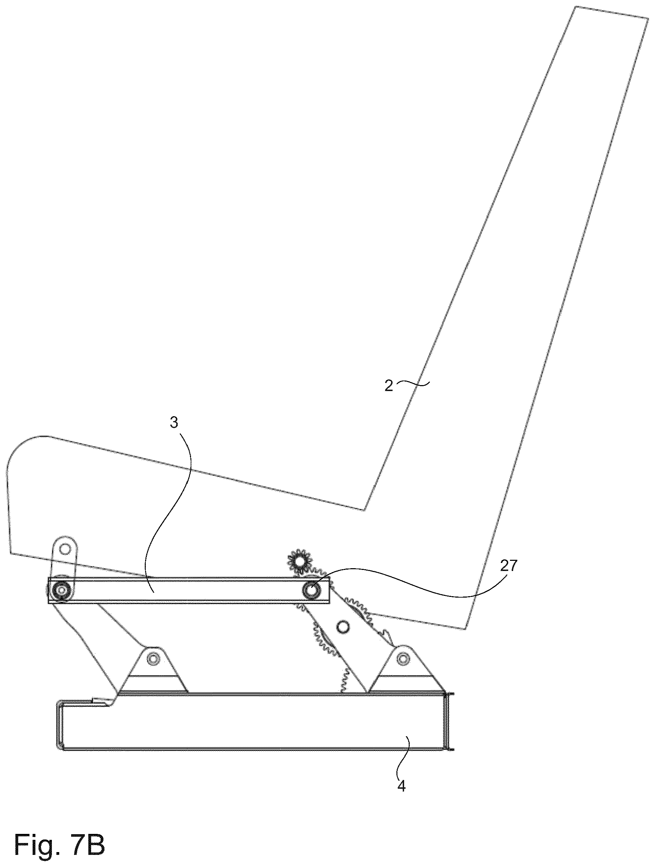

Die Figuren 7A und 7B zeigen, insbesondere im Vergleich zueinander, eine mögliche Ausführungsform einer Sitzneigungsverstellung.

Gemäß Figur 7A ist der Sitzneigungswinkel 0°, d.h. das Federungsoberteil 3ist hierbei im Wesentlichen parallel zum dem Federungsunterteil 4.

Eine Sitzneigung kann hierbei wie in der Figur 7B gezeigt realisiert werden, indem der Sitz 2 um die zweite Schwenkachse 27 verschwenkt wird. Eine entsprechende Drehung des Fahrzeugsitzes gegenüber dem Federungsoberteil 3 resultiert hierbei in einer Drehung des ersten Zahnradelements 7 um die Achse 27 und entsprechend einer Abrollbewegung des ersten Zahnradelements 7 auf dem dritten Zahnradelement 9. Um eine sichere Fahrposition des Fahrzeugsitzes 2 zu erhalten, wird entsprechend der Verschwenkung des Sitzes 2 um die Achse 27 zwischen der vierten Schwenkachse und dem Fahrzeugsitz 2 ein Abstandshalter 41 eingebracht, welcher vorzugsweise in seiner Länge variabel ausgebildet sein kann.

### Bezugszeichenliste

- 1: Federungsvorrichtung
- 2: Fahrzeugsitz
- 3: Federungsoberteil
- 4: Federungsunterteil
- 5: erste Verbindungsschwinge
- 6: zweite Verbindungsschwinge
- 7: erstes Zahnradelement
- 8: zweites Zahnradelement
- 9: drittes Zahnradelement
- 10: erste Federeinheit
- 11: Verstelleinrichtung
- 12: erster Endbereich der Federeinheit
- 13: zweiter Endbereich der Federeinheit
- 14: Hebelelement
- 15: erste Drehachse
- 16: viertes Zahnradelement
- 17: erster Endanschlag
- 18: zweiter Endanschlag
- 19: erste Drehrichtung
- 20: zweite Drehrichtung
- 21: erste Einhängevorrichtung
- 22: zweite Einhängevorrichtung
- 23: Dämpfer
- 24: erster Endbereich des Dämpfers
- 25: zweiter Endbereich des Dämpfers
- 26: erste Schwenkachse
- 27: zweite Schwenkachse
- 28: dritte Schwenkachse
- 29: vierte Schwenkachse
- 30: Befestigungselement
- 31: fünfte Schwenkachse
- 32: Befestigungsöffnung
- 33: erste Drehrichtung
- 34: zweite Drehrichtung
- 35: erster Zahnradelementendbereich
- 36: zweiter Zahnradelementendbereich
- 37: Verbindungsstange
- 38: Stabilisierungsverbindung
- 39: dritte Einhängevorrichtung
- 40: vierte Einhängevorrichtung
- 41: Abstandshalter
- B: Breitenrichtung
- L: Längsrichtung
- H: Höhenrichtung

## Patentansprüche

1. Federungsvorrichtung (1) für einen Fahrzeugsitz (2), umfassend ein Federungsoberteil (3) und ein Federungsunterteil (4), welche durch eine erste Verbindungsschwinge (5) und eine zweite Verbindungsschwinge (6) miteinander verbunden sind,
**dadurch gekennzeichnet, dass**
die Federungsvorrichtung (1) ein an dem Federungsoberteil (3) angeordnetes erstes einstellbares Zahnradelement (7), ein mit der ersten Verbindungsschwinge (5) verbundenes zweites Zahnradelement (8) zum Verstellen einer Position einer ersten Federeinheit (10), wodurch eine Federkraft und eine Federrate der Federungsvorrichtung (1) veränderbar sind, und ein mit dem ersten (7) und dem zweiten Zahnradelement (8) zumindest wirkverbundenes und mit der ersten Verbindungsschwinge (5) verbundenes drittes Zahnradelement (9) aufweist.

2. Federungsvorrichtung (1) nach Anspruch 1,
**dadurch gekennzeichnet, dass**
die erste Federeinheit (10) mit einem ersten Endbereich (12) mittels einer durch das zweite Zahnradelement (8) betätigbaren Verstelleinrichtung (11) mit der ersten Verbindungsschwinge (5) und mit einem zweiten Endbereich (13) mit dem Federungsunterteil (4) verbunden ist.

3. Federungsvorrichtung (1) nach Anspruch 1 oder 2,
**dadurch gekennzeichnet, dass**
ein Hebelelement (14) mit dem ersten Zahnradelement (7) mittels einer ersten Drehachse (15) verbunden ist, mittels welches Hebelelements (14) das erste Zahnradelement (7) einstellbar ist.

4. Federungsvorrichtung (1) nach einem der vorangegangenen Ansprüche,
**dadurch gekennzeichnet, dass**
das zweite Zahnradelement (8) Kreissektor-förmig ausgebildet ist.

5. Federungsvorrichtung (1) nach einem der vorangegangenen Ansprüche,
**dadurch gekennzeichnet, dass**
ein Übersetzungsverhältnis des ersten Zahnradelements (7) und des zweiten Zahnradelements (8) mindestens 2, bevorzugter mindestens 3 und besonders bevorzugt mindestens 5 ist.

6. Federungsvorrichtung (1) nach einem der vorangegangenen Ansprüche,
**dadurch gekennzeichnet, dass**
ein viertes Zahnradelement (16) vorgesehen ist, welches mit der ersten Verbindungsschwinge (5) verbunden ist und mit dem zweiten (8) und dem dritten Zahnradelement (9) oder dem ersten (7) und dem dritten Zahnradelement (9) in Wirkkontakt steht oder ein Zahnriemenelement vorgesehen ist, welches mit dem zweiten (8) und dem dritten Zahnradelement (9) zumindest wirkverbunden ist, wobei das dritte Zahnradelement (9) als ein Doppelzahnradelement ausgebildet ist.

7. Federungsvorrichtung (1) nach Anspruch 2,
**dadurch gekennzeichnet, dass**
das Hebelelement (14) über ein selbsthemmendes Getriebe mit der ersten Drehachse (15) und mit dem ersten Zahnradelement (7) verbunden ist.

8. Federungsvorrichtung (1) nach Anspruch 2,
**dadurch gekennzeichnet, dass**
die Verstelleinrichtung (11) eine erste Einhängevorrichtung (21) aufweist, mit welcher die erste Federeinheit (10) verbindbar ist, wobei die erste Einhängevorrichtung (21) exzentrisch mit der Verstelleinrichtung (11) verbunden ist.

9. Federungsvorrichtung (1) nach Anspruch 2,
**dadurch gekennzeichnet, dass**
die Verstelleinrichtung (11) eine zweite Einhängevorrichtung (22) aufweist, mit welcher ein erster Endbereich (24) eines Dämpfers (23) verbindbar ist, wobei die zweite Einhängevorrichtung (22) exzentrisch mit der Verstelleinrichtung (11) verbunden ist und ein zweiter Endbereich (25) des Dämpfers (23) mit dem Federungsunterteil (4) verbindbar ist.

## Claims

1. Suspension device (1) for a vehicle seat (2), comprising a suspension upper part (3) and a suspension lower part (4) that are interconnected by means of a first connecting swing arm (5) and a second connecting swing arm (6),
**characterised in that**
the suspension device (1) comprises a first settable gear element (7) that is arranged on the suspension upper part (3), a second gear element (8) that is connected to the first connecting swing arm (5) and is intended for adjusting a position of a first spring unit (10), as a result of which a spring force and a spring rate of the suspension device (1) can be changed, and a third gear element (9) that is at least operatively connected to the first (7) and to the second gear element (8) and that is connected to the first connecting swing arm (5).

2. Suspension device (1) according to claim 1,
**characterised in that**
a first end region (12) of the first spring unit (10) is connected to the first connecting swing arm (5) by means of an adjustment means (11) that can be actuated by the second gear element (8), and a second end region (13) of said spring unit is connected to the suspension lower part (4).

3. Suspension device (1) according to either claim 1 or claim 2,
**characterised in that**
a lever element (14) is connected to the first gear element (7) by means of a first axis of rotation (15), by means of which lever element (14) the first gear element (7) can be set.

4. Suspension device (1) according to any of the preceding claims,
**characterised in that**
the second gear element (8) is in the shape of a circular sector.

5. Suspension device (1) according to any of the preceding claims,
**characterised in that**
a gear ratio of the first gear element (7) and of the second gear element (8) is at least 2, more preferably at least 3, and particularly preferably at least 5.

6. Suspension device (1) according to any of the preceding claims,
**characterised in that**
a fourth gear element (16) is provided, which element is connected to the first connecting swing arm (5) and is in operative contact with the second (8) and the third gear element (9) or with the first (7) and the third gear element (9), or a toothed belt element is provided, which element is at least operatively connected to the second (8) and the third gear element (9), the third gear element (9) being formed as a double gear element.

7. Suspension device (1) according to claim 2,
**characterised in that**
the lever element (14) is connected to the first axis of rotation (15) and to the first gear element (7) by means of a self-locking transmission.

8. Suspension device (1) according to claim 2,
**characterised in that**
the adjustment means (11) comprises a first mounting device (21) to which the first spring unit (10) can be connected, the first mounting device (21) being connected eccentrically to the adjustment means (11).

9. Suspension device (1) according to claim 2,
**characterised in that**
the adjustment means (11) comprises a second mounting device (22) to which a first end region (24) of a damper (23) can be connected, the second mounting device (22) being connected eccentrically to the adjustment means (11) and it being possible for a second end region (25) of the damper (23) to be connected to the suspension lower part (4).

## Revendications

1. Système de suspension (1) pour un siège de véhicule (2), comportant une partie supérieure de suspension (3) et une partie inférieure de suspension (4), lesquelles sont reliées l'une à l'autre par un premier élément oscillant de liaison (5) et un second élément oscillant de liaison (6),
**caractérisé par le fait que**
le système de suspension (1) présente un premier élément roue dentée (7) réglable, disposé sur la partie supérieure de suspension (3), un deuxième élément roue dentée (8) relié au premier élément oscillant de liaison (5) pour le réglage d'une position d'une première unité de ressorts (10), ce par quoi une force du ressort et une constante du ressort du système de suspension (1) peuvent être changées, et un troisième élément roue dentée (9) qui est au moins relié fonctionnellement au premier élément roue dentée (7) et au deuxième élément roue dentée (8) et est relié au premier élément oscillant de liaison (5).

2. Système de suspension (1) selon la revendication 1,
**caractérisé par le fait que**
la première unité de ressorts (10) est reliée par une première région d'extrémité (12) au moyen d'un dispositif de réglage (11) qui peut être actionné par le deuxième élément roue dentée (8), au premier élément oscillant de liaison (5), et par une seconde région d'extrémité (13), à la partie inférieure de suspension (4).

3. Système de suspension (1) selon l'une des revendications 1 ou 2,
**caractérisé par le fait que**
un élément de levier (14) est relié au premier élément roue dentée (7) au moyen d'un premier axe de rotation (15), au moyen duquel élément de levier (14) le premier élément roue dentée (7) peut être réglé.

4. Système de suspension (1) selon l'une des revendications précédentes,
**caractérisé par le fait que**
le deuxième élément roue dentée (8) est réalisé sous la forme d'un secteur circulaire.

5. Système de suspension (1) selon l'une des revendications précédentes,
**caractérisé par le fait qu'**
un rapport de transmission du premier élément roue dentée (7) et du deuxième élément roue dentée (8) est d'au moins 2, de façon préférée d'au moins 3 et de façon particulièrement préférée d'au moins 5.

6. Système de suspension (1) selon l'une des revendications précédentes,
**caractérisé par le fait qu'**
un quatrième élément roue dentée (16) est prévu, lequel est relié au premier élément oscillant de liaison (5) et est en contact fonctionnel avec le deuxième élément roue dentée (8) et le troisième élément roue dentée (9) ou le premier élément roue dentée (7) et le troisième élément roue dentée (9) ou un élément courroie dentée est prévu, lequel est au moins relié fonctionnellement au deuxième élément roue dentée (8) et au troisième élément roue dentée (9), le troisième élément roue dentée (9) étant réalisé en tant qu'un élément double roue dentée.

7. Système de suspension (1) selon la revendication 2,
**caractérisé par le fait que**
l'élément de levier (14) est relié au premier axe de rotation (15) et au premier élément roue dentée (7) par une transmission autobloquante.

8. Système de suspension (1) selon la revendication 2,
**caractérisé par le fait que**
le dispositif de réglage (11) présente un premier dispositif de suspension (21) avec lequel la première unité de ressorts (10) peut être reliée, le premier dispositif de suspension (21) étant relié de manière excentrique avec le dispositif de réglage (11).

9. Système de suspension (1) selon la revendication 2,
**caractérisé par le fait que**
le dispositif de réglage (11) présente un second dispositif de suspension (22) avec lequel une première région d'extrémité (24) d'un amortisseur (23) peut être reliée, le second dispositif de suspension (22) étant relié de manière excentrique avec le dispositif de réglage (11) et une seconde région d'extrémité (25) de l'amortisseur (23) étant apte à être reliée avec la partie inférieure de suspension (4).
